# EUROPÄISCHE PATENTANMELDUNG

(11) **EP 2 875 985 A1**
(43) Veröffentlichungstag der Anmeldung: **27.05.2015**
(21) Anmeldenummer: 13194163.5
(22) Anmeldetag: 22.11.2013
(51) Int. Cl.: B60L 11/18

(54) **Ladestation für Elektrofahrzeuge mit integriertem Energiespeicher**

(71) Anmelder: Hochschule für angewandte Wissenschaften Deggendorf, 94469 Deggendorf (DE)
(72) Erfinder: Hämmerle, Richard, 94244 Teisnach (DE)
(74) Vertreter: Metten, Karl-Heinz

(57) **Zusammenfassung**

Die vorliegende Erfindung betrifft eine Vorrichtung zum Laden mindestens eines Elektrofahrzeugs, umfassend mindestens ein erstes elektrisches Verbindungselement, ausgelegt und eingerichtet, um die Vorrichtung mit einem Stromnetz zu verbinden, und mindestens ein zweites elektrisches Verbindungselement, ausgelegt und eingerichtet, um die Vorrichtung mit mindestens einem Elektrofahrzeug zu verbinden, wobei die Vorrichtung mindestens einen elektrischen Energiespeicher und mindestens einen ersten Gleichrichter umfasst, wobei das mindestens eine erste elektrische Verbindungselement mit einer Eingangsseite des mindestens einen ersten Gleichrichters verbindbar oder verbunden ist, und der mindestens eine elektrische Energiespeicher mit einer Ausgangsseite des mindestens einen ersten Gleichrichters verbindbar oder verbunden ist und das mindestens eine zweite elektrische Verbindungselement mit dem mindestens einen Energiespeicher verbindbar oder verbunden ist.

## Beschreibung

Die vorliegende Erfindung betrifft eine Vorrichtung zum Laden mindestens eines Elektrofahrzeugs, umfassend mindestens ein erstes elektrisches Verbindungselement, ausgelegt und eingerichtet, um die Vorrichtung mit einem Stromnetz zu verbinden, und mindestens ein zweites elektrisches Verbindungselement, ausgelegt und eingerichtet, um die Vorrichtung mit mindestens einem Elektrofahrzeug zu verbinden.

Im Stand der Technik sind verschiedene Elektrofahrzeugtypen bekannt, beispielsweise Elektroautos, Fahrräder, Busse oder dergleichen. Zum Laden derselben werden Ladestationen verwendet, die in der Regel an das Stromnetz angeschlossen sind, und die die zum Aufladen der Elektrofahrzeuge notwendige Energie bereitstellen können.

Zum Aufladen von Fahrzeugen weisen Ladestation sogenannte Ladepunkte auf, die eine Verbindung eines Elektrofahrzeugs mit der Ladestation ermöglichen. Ladepunkte umfassen dabei beispielsweise ein Anschlusskabel und ein Steckerelement, um die Ladestation elektrisch mit dem Elektrofahrzeug zu kontaktieren.

Im Stand der Technik sind zum Aufladen von Elektrofahrzeugen verschiedene Standards bekannt. Einige Elektrofahrzeuge werden beispielsweise mit Hilfe eines 230V, 16A einphasigen Steckers, beispielsweise eines Schukosteckers, aufgeladen. Dies hat den Vorteil, dass diese beispielsweise in einer Garage zu Hause direkt geladen werden können. Nachteilig an diesem Ladestandard ist jedoch, dass gerade bei Elektrofahrzeugen mit großen Akkumulatoren der Ladevorgang sehr lange dauert, da die Ladeleistung begrenzt ist.

Ein alternativer Ladestandard ist CHAdeMO, der ein Aufladen eines Akkumulators eines Elektrofahrzeugs mit bis zu 62,5 kW Ladeleistung ermöglicht. Beim CHAdeMO-Protokoll verbindet sich ein Batterie-Management-System eines Elektrofahrzeugs mit der Ladestation zu einem Master-Slave-System. Das Elektrofahrzeug liefert den aktuellen Ladestand des Fahr-Akkus, die Gleichspannung, und die maximale Stromstärke mit der geladen werden darf, um ein möglichst schnelles und schonendes Aufladen zu ermöglichen. Die Spannung bewegt sich bei CHAdeMo im Bereich von 300 bis 600 Volt und die Stromstärke bis zu einigen 100 Ampere.

Ein weiterer alternativer Ladestandard ist in IEC 62196 definiert. IEC 62196 ist eine internationale Norm für eine Reihe der Steckertypen und Lademodi für Elektrofahrzeuge und wird von der International Electrotechnical Commission gepflegt. Die Norm ist in Deutschland als DIN-Norm DIN EN 62196 gültig und übernimmt die IEC-61851-Definition für einen Signalpin, der den Ladestrom schaltet. Die Ladestation bzw. der Ladepunkt ist spannungsfrei, bis ein Elektrofahrzeug mit dieser verbunden wird. Während des Ladevorgangs kann dann das Fahrzeug nicht in Betrieb genommen werden. Dabei sind in der Ladestation Pulsweitenmodulationskommunikation (PWM), FI-Schalter, Überstromschutz, Abschaltung sowie eine spezifische Ladesteckdose vorgeschrieben. Mittels PWM wird der maximal zulässige Ladestrom oder die Verfügbarkeit digitaler Kommunikation kodiert. Letzter bildet die Grundlage für gesteuertes Laden von Elektrofahrzeugen, um den Ladevorgang gezielt zu beeinflussen. Die Spezifikation Mode 3 ist für die Schnellladung bis 250 A vorgesehen. Einfache Stecker mit Pilotkontakt nach Mode 2 können eingesetzt werden, begrenzen jedoch den Ladestrom auf 32 A. Für höhere Ladeströme muss ein passender Lademodus erkannt werden. Ein Typ 2: EN 62196-2 Stecker ermöglicht somit beispielsweise in Mode 3 Lademodi vom einphasigen 16-A- bis dreiphasigen 63-A-Lademodus (entsprechend 3,7 kW bis 43,5 kW).

Es ist für den Fachmann offensichtlich, dass die obigen Ladenormen nur exemplarisch zu verstehen sein sollen. Selbstverständlich sind auch weitere alternative Ladenormen im Stand der Technik bekannt bzw. können zukünftig definiert werden.

Nachteilig an diesen verschiedenen Ladenstandards ist, dass eine Ladestation für einen wirtschaftlichen Betrieb mindestens jeweils einen Ladepunkt für mehr als einen der obigen Ladestandards bereitstellen sollte. Dies ist unter anderem darin begründet, dass derzeit verschiedene Elektrofahrzeughersteller verschiedene Ladenormen unterstützen, so dass nur bei einer Unterstützung von mehr als einem Ladestandard sichergestellt werden kann, eine möglichst große Anzahl verschiedener Elektrofahrzeuge zu laden.

Werden Ladepunkte für mehr als eine der obigen Ladenormen an einer Ladestation bereitgestellt, so muss diese in der Lage sein, alle denkbaren Belastungsfälle durch verschiedene Typen von Elektrofahrzeugen, die geladen werden sollen, zu ermöglichen. Dies betrifft insbesondere, dass bei Ladevorgängen die maximale Ladeleistung der Ladestation sowie der Maximalbelastung der einzelnen Phasen beachtet wird. Dabei wird jedoch die maximale Ladeleistung einer Ladestation durch üblicherweise einen Anschlusswert einer Anschlussleistung von 43,6 kW begrenzt.

Insbesondere ist es nachteilig, dass durch die unterschiedlichen Ladestandards eine asymmetrische Belastung der einzelnen Phase der Anschlussleitung der Ladestation an das Stromnetz erfolgen kann, so dass gerade in dem Fall, in dem eine höhere Ladeleistung der Ladestation bevorzugt ist, also wenn mehrere Elektrofahrzeuge gleichzeitig geladen werden sollen, nicht die maximal mögliche Ladeleistung von der Ladestation bereitgestellt werden kann. Beispielsweise kann bei einem Laden eines Fahrzeugs mit Schukostecker und einem zweiten Fahrzeug gemäß der CHAdeMo - Ladenorm eine asymmetrische Belastung der Phasen der Anschlussleitung auftreten, so dass eine Phase der Anschlussleistung maximal belastet ist, während die verbleibenden Phasen der Anschlussleitung mehr Leistung bereitstellen könnten. Dies führt dazu, dass in der Summe eine suboptimale Leistungsabgabe der Ladestation erfolgt, diese also mit Bezug auf ihre Anschlussleistung theoretisch eine höhere Ladeleistung bereitstellen könnte als tatsächlich verfügbar ist.

Die Aufgabe der vorliegenden Erfindung ist es daher, eine Vorrichtung zu liefern, die Ladepunkte für unterschiedliche Ladenormen bereitstellen kann, wobei die Vorrichtung in jeder Lastsituation die maximal mögliche Ladeleistung gemäß der Anschlussleistung der Ladestation bereitstellen kann, und wobei insbesondere auch zeitweise eine größere Ladeleistung als die Anschlussleistung der Ladestation bereitstellbar ist.

Diese Aufgabe wird dadurch gelöst, dass die Vorrichtung mindestens einen elektrischen Energiespeicher und mindestens einen ersten Gleichrichter umfasst, wobei das mindestens eine erste elektrische Verbindungselement mit einer Eingangsseite des mindestens einen ersten Gleichrichters verbindbar oder verbunden ist, und der mindestens eine elektrische Energiespeicher mit einer Ausgangsseite des mindestens einen ersten Gleichrichters verbindbar oder verbunden ist und das mindestens eine zweite elektrische Verbindungselement mit dem mindestens einen Energiespeicher verbindbar oder verbunden ist.

Unter zwei miteinander verbindbaren oder verbundenen Elementen soll sowohl eine unmittelbare als auch eine mittelbare Verbindung derselben verstanden werden können. Unter unmittelbar verbunden kann im Sinne der vorliegenden Erfindungen verstanden werden, dass neben offensichtlicherweise für eine elektrische Kontaktierung oder aus Sicherheitsgründen notwendige Elemente bzw. Mess- oder Regelelemente zwischen den zwei verbundenen Elementen keine weitere Elemente zwischengeschaltet sind. Unter einer mittelbaren Verbindung kann verstanden werden, dass weitere Elemente elektrisch zwischengeschaltet sein können.

Mit der erfindungsgemäßen Vorrichtung, die insbesondere in Form einer Ladestation bereit gestellt sein kann, wird es somit ermöglicht, durch den mindestens einen Energiespeicher die Ladeleistung einer Ladestation von der Anschlussleistung zu entkoppeln. Dies ist insbesondere in den Fällen vorteilhaft, in denen die Ladestation an einen üblichen Drehstromanschluss eines Stromnetzes mit 400 Veff und 565V Spitzenwert angeschlossen ist und Ladepunkte für verschiedene Ladenormen bereitgestellt werden. Unter einem Stromnetz im Sinne der vorliegenden Erfindung soll dabei insbesondere ein öffentliches Stromnetz verstanden werden können.

Die im Stand der Technik bekannten Ladenormen unterscheiden sich unter anderem darin, dass entweder mit Gleichstrom (CHAdeMO), ein-phasigem oder drei-phasigem Wechselstrom (IEC 61851 Mode 3), oder ein-phasigem Wechselstrom (Schuko-Stecker) geladen wird. Je nach Ladesituation durch Elektrofahrzeuge mit unterschiedlichen Ladenormen oder einer asymmetrischen Ladung mehrere Elektrofahrzeuge an Ladepunkten einer Ladenorm an der Ladestation kann durch den erfindungsgemäßen Energiespeicher eine asymmetrische Belastung der Anschlussleitung verhindert werden, so dass in jeder möglichen Lastsituation die maximale mögliche Ladeleistung bereitstellbar ist.

Beispielsweise kann zunächst ein von einer Anschlussleitung bereitgestellter Drehstrom gleichgerichtet werden, um den mindestens einen Energiespeicher zu laden. Der Energiespeicher kann dann die notwendige Spannung und den notwendigen Strom für die unterschiedlichen Ladepunkte und Ladenormen bereitstellen, beispielsweise indem der Energiespeicher über einen Wechselrichter oder einen Abwärtswandler mit einem Elektrofahrzeug verbunden wird.

Zudem ermöglicht die erfindungsgemäße Vorrichtung, dass Lastschwankungen ausgeglichen werden können und Rückwirkung der Ladevorgänge auf das Stromnetz und die einzelnen Ladepunkte untereinander minimiert werden.

Auch ermöglicht der mindestens eine Energiespeicher, dass im Falle erhöhten Leistungsbedarfs eine Ladeleistung von der Vorrichtung bereitstellbar ist, die höher als die Anschlussleistung ist.

Eine erfindungsgemäße Vorrichtung kann somit eine Überlastung einzelner Phasen einer Anschlussleitung verhindern und jederzeit die maximal mögliche Ladeleistung bereitstellen, wobei verschiedene Ladepunkte, insbesondere beispielsweise AC Typ 1/2, DC Combo 2, DC CHAdeMo, sowie unterschiedliche Ladenormen, insbesondere beispielsweise AC Mode 1 / Mode 2 / Mode 3, DC Combo 2, DC CHAdeMo, zum Einsatz kommen können. Dabei kann insbesondere vorgesehen sein, dass die Vorrichtung mindestens zwei, vorzugsweise drei, vier, fünf oder mehr, unterschiedliche Ladenormen unterstützt und ein gleichzeitiges Laden von Elektrofahrzeugen gemäß dieser unterschiedlichen Ladenormen zeitgleich ermöglicht, insbesondere an jeweils mindestens zwei Ladepunkten für jede der Ladenormen.

Dabei kann vorgesehen sein, dass die Vorrichtung weiterhin einen Gleichstromumrichter, umfassend mindestens einen Wechselrichter, mindestens einen Transformator, mindestens einen zweiten Gleichrichter und mindestens ein erstes Filterelement umfasst, wobei eine Eingangsseite des mindestens einen Wechselrichters mit der Ausgangsseite des mindestens einen ersten Gleichrichters verbindbar oder verbunden ist und eine Ausgangsseite des mindestens einen ersten Wechselrichters mit einer Eingangsseite mindestens eines zweiten Gleichrichters verbindbar oder verbunden ist, und wobei insbesondere die Ausgangsseite des mindestens einen zweiten Gleichrichters mit einer Eingangsseite des mindestens eines ersten Filterelements verbindbar oder verbunden ist, und wobei die Ausgangsseite des mindestens einen ersten Filterelements mit dem mindestens einen Energiespeicher verbindbar oder verbunden ist.

Erfindungsgemäß kann die wellige Gleichspannung, die von dem mindestens einen ersten Gleichrichter bereitgestellt ist, in einen hochfrequenten Wechselstrom umgewandelt werden. Dabei kann gemäß einer Ausführungsform der vorliegenden Erfindung vorgesehen sein, dass der mindestens eine Wechselrichter einen Wechselstrom mit einer Frequenz in einem Bereich von 1 kHz bis 1 MHz, insbesondere in einem Bereich von 10 kHz bis 100 kHz, bereitstellen kann. Über den nachgeschalteten mindestens einen Transformator kann eine galvanische Trennung bereitgestellt werden und zudem kann durch den mindestens einen Transformator die Ausgangsspannung reguliert werden. Mittels des mindestens einen weiteren Gleichrichters kann eine erneute Gleichrichtung und, gemäß einer Ausführungsform der vorliegenden Erfindung eine Filterung, der Spannung erfolgen.

Auch kann gemäß einer Ausführungsform der vorliegenden Erfindung vorgesehen sein, dass der mindestens eine erste und/oder der mindestens eine zweite Gleichrichter in Form eines dreiphasen Brückengleichrichters bereitgestellt ist, insbesondere in Form eines Dreipulsgleichrichter, eines Sechspulsgleichrichter, eines Zwölfpulsgleichrichter, eines Achtzehnpulsgleichrichters oder eines Vierundzwanzigpulsgleichrichters. Dreiphasengleichrichter sind elektronische Gleichrichterschaltungen, die Dreiphasenwechselstrom in Gleichstrom umwandeln können. Dreipulsgleichrichter verwenden nur die positiven oder negativen Halbschwingungen und deren Summe wird als Ausgangsgleichspannung verwendet. Sechspulsgleichrichter stellen eine Form von Brückengleichrichter dar und nutzen jeweils beide Halbschwingungen jeder Phase zur Gleichrichtung. Die Zwölfpulsschaltung besteht aus zwei in Serie geschalteten Drehstrom-Brückenschaltungen. Diese weisen einen geringen Oberschwingungsanteil auf und können daher für bestimmte Ausführungsformen der vorliegenden Erfindung besonders vorteilhaft sein.

Gemäß einer Ausführungsform der Erfindung kann vorgesehen sein, dass der mindestens eine Energiespeicher in Form eines Akkumulators und/oder eines Kondensators bereitgestellt ist.

Auch kann vorgesehen sein, dass das mindestens eine zweite elektrische Verbindungselement mit dem mindestens einen Energiespeicher über mindestens ein zweites Filterelement und/oder mindestens einen, insbesondere geregelten, Abwärtswandler verbindbar oder verbunden ist.

Ein erfindungsgemäßer Abwärtswandler umfasst in der Regel einen Schalter, der insbesondere in Form eines Transistors ausgebildet ist. Die Höhe der Ausgangsspannung kann durch geregeltes Ein- und Ausschalten des Schalters reguliert werden. Dabei ist der Ausgangsstrom des Abwärtswandlers stets höher als dessen mittlerer Eingangsstrom. Abwärtswandler bieten dabei technisch einfache, zuverlässige und kostengünstige Realisierungsmöglichkeiten für unterschiedliche Ladespannungen und Ströme an den bereitgestellten Ladepunkten.

Auch kann erfindungsgemäß vorgesehen sein, dass die mindestens eine Regelungseinrichtung in Wirkverbindung mit mindestens einer ersten Messeinrichtung umfasst ist, wobei die mindestens eine Messeinrichtung ausgelegt und eingerichtet ist, um den Ladezustand, die Temperatur und/oder die Spannung des mindestens einen Energiespeichers zu messen, und wobei die mindestens eine Regelungseinrichtung ausgelegt und eingerichtet ist, um einen Ladezustand des mindestens einen Energiespeichers zu regeln, insbesondere durch eine Steuerung oder Regelung des mindestens einen Wechselrichters des mindestens einen Gleichstromumrichters , des mindestens einen Gleichrichters und/oder eines Stelltrafos.

Durch eine erfindungsgemäße Regeleinrichtung kann somit der mindestens eine Energiespeicher effizient und schonend geladen werden.

Gemäß einer Ausführungsform der vorliegenden Erfindung kann vorgesehen sein, dass mindestens ein drittes elektrisches Verbindungselement, ausgelegt und eingerichtet, um die Vorrichtung mit mindestens einem Elektrofahrzeug zu verbinden, umfasst ist, wobei das mindestens eine dritte elektrische Verbindungselement mit der Anschlussleitung der Vorrichtung an das Stromnetz verbindbar oder verbunden ist, insbesondere über mindestens ein zwischengeschaltetes, steuerbares oder regelbares Strombegrenzungselement und/oder eine Strombegrenzung des Ladestroms durch ein mit den dritten elektrischen Verbindungselement verbindbares oder verbundenes Elektrofahrzeug vorgegeben oder vorgebbar ist..

Mit dem mindestens einen dritten Verbindungselement wird ermöglicht, dass Elektrofahrzeuge mit 3-Phasen AC Ladung effizient geladen werden können. Ein Laden dieser Elektrofahrzeuge führt zu einer gleichförmigen Belastung der Phasen der Anschlussleitung des Stromnetzes, so dass kein Zwischenspeichern der Energie in dem mindestens einen Energiespeicher notwendig ist. Selbstverständlich kann vorgesehen sein, dass ein gesteuerter Schütz und/oder eine Regelungselektronik zwischengeschaltet ist, um ein sicheres Aufladen eines an das dritte elektrische Verbindungselement angeschlossenes zu ermöglichen.

Es kann des weiteren bevorzugt sein, dass mindestens eines der zweiten elektrischen Verbindungselemente mit dem mindestens einen Energiespeicher über, insbesondere einen Wechselrichter ausgelegt und eingerichtet zur Erzeugung von einphasigem oder dreiphasigen Wechselstrom, verbindbar oder verbunden ist.

Ein erfindungsgemäßer Wechselrichter kann insbesondere vorteilhaft sein, um Akkumulatoren von Elektrofahrzeugen zu laden, die Wechselstrom als Ladestrom benötigen. Insbesondere kann es vorteilhaft sein, einen Wechselrichter für einphasigen Wechselstrom zu verwenden, um Elektrofahrzeuge zu laden, die an eine Schuko-Steckdose angeschlossen werden können.

Durch den erfindungsgemäßen Energiespeicher in Kombination mit dem Wechselrichter kann dabei eine asymmetrische Belastung der Phasen der Anschlussleitung der Vorrichtung vermieden werden.

Gemäß einer Ausführungsform der vorliegenden Erfindung kann vorgesehen sein, dass mindestens eine Regelungseinrichtung, ausgelegt und eingerichtet, um eine individuelle Ladespannung und/oder einen individuellen Ladestrom an jedem der zweiten und/oder dritten Verbindungselementen einzustellen oder einzuregeln, insbesondere durch Regelung oder Steuerung des mindestens einen Wechselrichters und/oder des mindestens einen Abwärtswandler, wobei insbesondere die mindestens eine Regelungseinrichtung ausgelegt und eingerichtet ist, um während eines Ladevorgangs Messwerte repräsentativ für die Spannung und/oder die Temperatur mindestens eines Akkumulators mindestens eines mit dem mindestens einen zweiten und/oder dritten Verbindungselement verbindbaren oder verbundenen Elektrofahrzeugs zu messen und/oder Schwellwerte für den Ladestrom und/oder die Ladespannung von dem mindestens einen Elektrofahrzeug zu empfangen und/oder mittels mindestens einer Eingabeeinrichtung bereitgestellte Schwellwerte zu erfassen, und die individuelle Ladespannung und/oder den individuellen Ladestrom an jedem der zweiten und/oder dritten Verbindungselemente in Abhängigkeit der erfassten Messwerte, der erfassten Schwellwerte und/oder der bereitgestellten Schwellwerte zu steuern oder zu regeln.

Dabei kann vorgesehen sein, dass die mindestens eine Eingabeeinrichtung ausgelegt und eingerichtet ist, um Eingabewerte eines Benutzers für einen bestimmten Ladezustand eines Elektrofahrzeugs und/oder einen bestimmten Zeitpunkt eines bestimmten Ladezustands zu erfassen, wobei die mindestens eine Regelungseinrichtung ausgelegt und eingerichtet ist, um den bestimmten Ladezustand, insbesondere zu einem bestimmten Zeitpunkt, bereitzustellen.

Durch eine erfindungsgemäße Regelungseinrichtung kann die gewünschte oder benötigte Ladeleistung an den jeweiligen zweiten und/oder dritten Verbindungselementen bereitgestellt werden. Dabei hat es sich als vorteilhaft erwiesen, wenn insbesondere Messwerte repräsentativ für die Spannung, den Strom und/oder die Temperatur mindestens eines Akkumulators eines zu ladenden Elektrofahrzeugs erfasst werden, um den Ladevorgang zu regeln. Auch kann es vorteilhaft sein, wenn Daten betreffend den Ladevorgang von dem Elektrofahrzeug selbst bereitgestellt werden, und diese von der erfindungsgemäßen Regelungseinrichtung berücksichtigt werden können.

Eine Eingabeeinrichtung kann sich beispielsweise als vorteilhaft erweisen, um einen gewünschten Ladezustand eines Elektrofahrzeugs und/oder einen gewünschten Zeitpunkt für einen gewünschten Ladezustand vorzugeben. Eine solche erfindungsgemäße Eingabeeinrichtung kann beispielsweise eine Tastatur oder ein Touchscreen sein, welche an der erfindungsgemäßen Vorrichtung angeordnet ist. Alternativ ist es selbstverständlich vorgesehen, dass eine solche Eingabeeinrichtung beispielsweise in Form eines Smartphones, Tablets, oder dergleichen eines Benutzers bereitstellbar ist, welches mit der erfindungsgemäßen Vorrichtung kommunizieren kann. Denkbare Eingaben sind beispielsweise ein gewünschter Ladezustand des Akkumulators des Elektrofahrzeugs, ein möglichst schnelles Laden des Elektrofahrzeugs, ein Zeitpunkt, an dem der gewünschte Ladezustand erreicht werden soll und/oder ein möglichst kostengünstiges Laden des Elektrofahrzeugs.

Durch eine erfindungsgemäße Regeleinrichtung kann somit eine Begrenzung und Steuerung der Ladevorgänge erfolgen, um beispielsweise in Kenntnis eines Ist-Ladezustands, eines eingegebenen Soll-Ladezustands und eines Zeitpunkts des Soll-Ladezustands den Ladevorgang im Hinblick auf ein optimales Laden sämtlicher verbundener Elektrofahrzeuge zu steuern. Auch werden prioritäts- und/oder preisgesteuerte Ladevorgänge ermöglicht.

Auch kann erfindungsgemäß vorgesehen sein, dass die Summe der Ladeströme der zweiten und/oder dritten Verbindungselemente kleiner oder gleich einem vorgegebenen Maximalwert ist, insbesondere kleiner oder gleich dem maximal abgebbaren Ladestrom des mindestens einen Energiespeicherspeichers ist.

Ein solcher Maximalwert kann den Vorteil aufweisen, dass keine Überlastung der erfindungsgemäßen Vorrichtung auftritt.

Gemäß einer Ausführungsform kann bevorzugt sein, dass das mindestens eine erste elektrische Verbindungselement mit dem Stromnetz, einer Photovoltaikanlage, einem Windkraftwerk, einem Wasserkraftwerk, einem Stromgenerator und/oder einem Elektrofahrzeug verbindbar oder verbunden ist, und insbesondere die mindestens eine Regelungseinrichtung ausgelegt und eingerichtet ist, um in dem mindestens einen Energiespeicher gespeicherte Energie an das Stromnetz abzugeben und/oder um einen von einem Elektrofahrzeug umfassten Energiespeicher zu laden und/oder um den mindestens einen elektrischen Energiespeicher durch in einem mit dem mindestens einen zweiten und/oder dritten Verbindungselement verbindbaren oder verbundenen Elektrofahrzeug zu laden.

Dies kann vorteilhaft sein, um neben dem Stromnetz eine weitere Energiequelle für das Laden von Elektrofahrzeugen verwenden zu können. Insbesondere in dem Fall hoher Strompreise und geringer Nachfrage an der erfindungsgemäßen Vorrichtung können Einspeiseschwankungen im Stromnetz durch die erfindungsgemäße Vorrichtung ausgeglichen werden.

Schließlich kann vorgesehen sein, dass die Vorrichtung mit mindestens einem Server in Wirkverbindung steht oder bringbar ist, wobei die mindestens eine Regelungseinrichtung ausgelegt und eingerichtet ist, um Daten der mit der Vorrichtung verbundenen Elektrofahrzeuge, der abgegebenen Ladeströme und/oder Ladespannungen der zweiten und/oder dritten Verbindungselemente, des Ladezustands des mindestens einen Energiespeichers und/oder des Zeitpunkts eines, insbesondere mittels der mindestens einen Eingabeeinrichtung vorgebbaren oder vorgegebenen, bestimmten Ladezustands eines Elektrofahrzeugs an den Server zu übermitteln, und wobei insbesondere der Server ausgelegt und eingerichtet ist, der mindestens einen Regelungseinrichtung eine Maximalwert der Summe der abgebbaren oder abzugebenden Ladeströme, insbesondere zu mindestens einem bestimmten Zeitpunkt, vorzugeben.

Durch einen erfindungsgemäßen Server kann eine zentrale Steuerung mindestens einer erfindungsgemäßer Vorrichtung erfolgen, insbesondere eine Einbindung in ein Smart Grid erfolgen.

Auch liefert die Erfindung ein System umfassend mindestens zwei erfindungsgemäße Vorrichtungen, wobei die Vorrichtungen untereinander, und insbesondere mit einem Server, in Wirkverbindung stehen oder bringbar sind, wobei ein Maximalwert der Summe der abgebbaren oder abzugebenden Ladeströme und/oder Spannungen, insbesondere zu mindestens einem bestimmten Zeitpunkt, aller Vorrichtungen vorgebbar oder vorgegeben ist.

Dabei kann vorgesehen sein, dass der Server ausgelegt und eingerichtet ist, um mindestens einer der Regelungseinrichtungen vorgegebene Werte einer Leistungsaufnahme und/oder Leistungsabgabe an das Stromnetz bereitzustellen.

Insbesondere in dem Fall, dass beispielsweise auf einem Parkplatz mindestens zwei, insbesondere eine Vielzahl von erfindungsgemäßen Vorrichtungen angeordnet sind, kann durch eine zentrale Steuerung der Ladevorgänge eine Überlastung des Stromnetzes verhindert werden.

Der Erfindung liegt somit die überraschende Erkenntnis zugrunde, dass die erfindungsgemäße Vorrichtung ein optimales Laden verschiedener Arten von Elektrofahrzeugen, die unterschiedliche Ladenormen unterstützen, ermöglicht, ohne dass eine Begrenzung der Ladeleistung durch eine asymmetrische Belastung der einzelnen Phasen der Anschlussleitung der Vorrichtung auftritt.

Dabei kann bevorzugt sein, dass mindestens ein zweites Verbindungselement mittels mindestens eines Abwärtswandlers, Aufwärtswandlers und/oder Gleichspannungswandlers mit dem mindestens einen Energiespeicher verbindbar oder verbunden ist, und mindestens ein zweites Verbindungselement mittels mindestens eines Wechselrichters mit dem mindestens einen Energiespeicher verbindbar oder verbunden ist und insbesondere mindestens ein drittes Verbindungselement mit der Anschlussleitung verbindbar oder verbunden ist, so dass insbesondere gleichzeitig Elektrofahrzeuge mit einphasigem und dreiphasigem Wechselstrom sowie Gleichstrom geladen werden können, wobei die maximal zur Verfügung stehende Anschlussleistung der erfindungsgemäßen Vorrichtung jederzeit nutzbar ist. Auch ermöglicht die erfindungsgemäße Vorrichtung, dass neben einem Anschluss an das Stromnetz beispielsweise regenerative Energieerzeuger genutzt werden können, wobei auch Leistung an das Stromnetz abgebbar ist, insbesondere sofern diese nicht zum Laden von Elektrofahrzeugen benötigt wird.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:

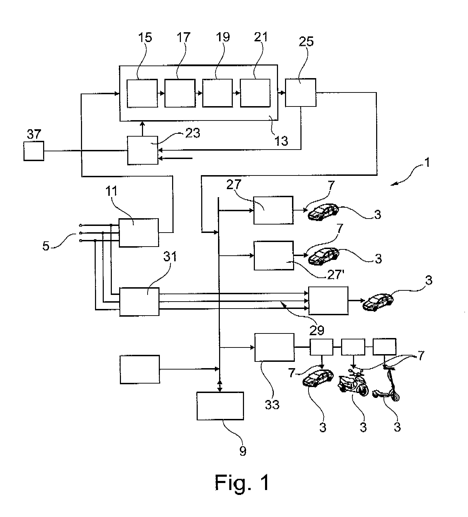

- Figur 1:: eine schematische Darstellung eines Ausführungsbeispiels einer erfindungsgemäßen Vorrichtung.

Figur 1 zeigt eine erfindungsgemäße Vorrichtung 1 zum Laden mindestens eines Elektrofahrzeugs 3. Ein erstes elektrisches Verbindungselement (nicht gezeigt) ist ausgelegt und eingerichtet, um die Vorrichtung 1 mit einem Stromnetz 5 zu verbinden.

Zweite elektrische Verbindungselemente 7 ist ausgelegt und eingerichtet, um die Vorrichtung 1 mit mindestens einem Elektrofahrzeug 3 zu verbinden. Die zweiten elektrischen Verbindungselemente 7 können dabei beispielsweise in Form von Steckern bereitgestellt sein.

Des weiteren umfasst die Vorrichtung 1 einen elektrischen Energiespeicher 9 und einen ersten Gleichrichter 11. Mittels des ersten Gleichrichters 11 kann der dreiphasige Wechselstrom des Stromnetzes 5 in Gleichstrom zum Laden des Energiespeichers 9 umwandelt werden. Die zweiten Verbindungselemente 7 sind mit dem Energiespeicher verbunden und können zum Laden der Elektrofahrzeuge 3 ebenfalls mit diesen verbunden werden.

Auch ist ein optionaler Gleichstromumrichter 13 zwischen dem ersten Gleichrichter 11 und dem Energiespeicher 9 angeordnet. Der Gleichstromumrichter 13 umfasst einen Wechselrichter 15 an den sich ein Transformator 17 anschließt. Im Anschluss wird der vom Wechselrichter 15 bereitgestellte und vom Transformator 17 transformierte Wechselstrom durch einen zweiten Gleichrichter 19 gleichgerichtet und durch ein erstes Filterelement 21 gefiltert, um anschließend den Energiespeicher 9 zu laden.

Mit einer Regeleinrichtung 23 in Wirkverbindung mit einer Messeinrichtung 25 , die den Ladezustand, die Temperatur und/oder die Spannung und Strom des Energiespeichers 9 messen kann, kann eine Regelung des Gleichstromumrichters 13 erfolgen, insbesondere entsprechend einem Sollwert, um einen gewünschten Ladezustand des Energiespeichers 9 bereitzustellen.

Zwei der zweiten elektrischen Verbindungselemente 7 sind mit dem Energiespeicher 9 über einen geregelten Abwärtswandler 27 bzw. einen Gleichspannungswandler 27' verbunden. Alternativ kann anstelle des Abwärtswandlers 27 bzw. des Gleichspannungswandlers 27' auch ein nicht gezeigten Aufwärtswandler zum Einsatz kommen. Durch eine Steuerung oder Regelung der Abwärtswandler 27 können individuelle Ladeströme und/oder Ladespannungen an den Ladenpunkten 7 gleichzeitig bereitgestellt werden.

Ein drittes elektrisches Verbindungselement 29 ist mit der Anschlussleitung der Vorrichtung 1 an das Stromnetz 5 verbunden. Der Anschluss des dritten Verbindungselements 29 erfolgt dabei über einen gesteuerten Schütz 31.

Drei der zweiten elektrische Verbindungselement 7 sind mit dem Energiespeicher 9 über einen Wechselrichter 33 verbunden. Der Wechselrichter 33 ist ausgelegt und eingerichtet zur Erzeugung von einphasigem Wechselstrom, so dass insbesondere Kleinelektrofahrzeuge geladen werden können. Auch lässt sich ein Schuko-Stecker mit dem Wechselrichter 33 verbinden (nicht gezeigt).

Durch die erfindungsgemäß Regelungseinrichtung 33 lässt sich somit eine individuelle Ladespannung und/oder ein individuellen Ladestrom an jedem der zweiten und dritten Verbindungselementen 7, 29 einstellen, indem der Wechselrichter 33 und die Abwärtswandler 27 geregelt werden. Dabei kann vorgesehen sein, dass die Regelungseinrichtung 33 eine Ladespannung von 230V bereitstellt, jedoch sind auch andere Ladespannungen denkbar, beispielsweise von 110V. Dies kann beispielsweise basierend auf Messwerten repräsentativ für die Spannung und/oder die Temperatur mindestens eines Akkumulators mindestens eines mit dem mindestens einen zweiten und/oder dritten Verbindungselement verbindbaren oder verbundenen Elektrofahrzeugs 3 erfolgen. Zusätzlich oder alternativ können Schwellwerte für den Ladestrom und/oder die Ladespannung von dem mindestens einen Elektrofahrzeug 3 von der Regelungseinrichtung 33 erfasst werden, beispielsweise durch eine nicht gezeigte Eingabeeinrichtung erfasst werden.

Der Energiespeicher 9 ist zudem mit einer regenerativen Energiequelle 35 verbunden, die den Energiespeicher 9 aufladen kann.

Die Vorrichtung 1 steht dabei zudem mit einem Server 37 in Wirkverbindung der Daten der mit der Vorrichtung 1 verbundenen Elektrofahrzeuge 3, der abgegebenen Ladeströme und/oder Ladespannungen der zweiten bzw. dritten Verbindungselemente 7, 29, des Ladezustands des mindestens einen Energiespeichers 9 sowie weitere Daten, beispielsweise der nicht gezeigten Eingabeeinrichtung, erfassen kann. Dabei kann der Server 37 auch mittels der Regelungseinrichtung 33 einen Maximalwert der Summe der abgebbaren oder abzugebenden Ladeströme, insbesondere zu mindestens einem bestimmten Zeitpunkt, vorgeben.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung zum Laden mindestens eines Elektrofahrzeugs, umfassend mindestens ein erstes elektrisches Verbindungselement, ausgelegt und eingerichtet, um die Vorrichtung mit einem Stromnetz zu verbinden, und mindestens ein zweites elektrisches Verbindungselement, ausgelegt und eingerichtet, um die Vorrichtung mit mindestens einem Elektrofahrzeug zu verbinden, **dadurch gekennzeichnet, dass**
die Vorrichtung mindestens einen elektrischen Energiespeicher und mindestens einen ersten Gleichrichter umfasst, wobei das mindestens eine erste elektrische Verbindungselement mit einer Eingangsseite des mindestens einen ersten Gleichrichters verbindbar oder verbunden ist, und der mindestens eine elektrische Energiespeicher mit einer Ausgangsseite des mindestens einen ersten Gleichrichters verbindbar oder verbunden ist und das mindestens eine zweite elektrische Verbindungselement mit dem mindestens einen Energiespeicher verbindbar oder verbunden ist.

2. Vorrichtung nach Anspruch 1, **gekennzeichnet durch**
einen Gleichstromumrichter, umfassend mindestens einen Wechselrichter, mindestens einen Transformator, mindestens einen zweiten Gleichrichter und mindestens ein erstes Filterelement, wobei eine Eingangsseite des mindestens einen Wechselrichters mit der Ausgangsseite des mindestens einen erstes Gleichrichters verbindbar oder verbunden ist und eine Ausgangsseite des mindestens einen erstens Wechselrichters mit einer Eingangsseite mindestens eines zweiten Gleichrichters verbindbar oder verbunden ist, und wobei insbesondere die Ausgangsseite des mindestens einen zweiten Gleichrichters mit einer Eingangsseite des mindestens einen ersten Filterelements verbindbar oder verbunden ist, und wobei die Ausgangsseite des mindestens einen ersten Filterelements mit dem mindestens einen Energiespeicher verbindbar oder verbunden ist.

3. Vorrichtung nach Anspruch 1 oder 2, **dadurch gekennzeichnet, dass**
der mindestens eine erste und/oder der mindestens eine zweite Gleichrichter in Form eines dreiphasen Brückengleichrichters bereitgestellt ist, insbesondere in Form eines Dreipulsgleichrichters, eines Sechspulsgleichrichters, eines Zwölfpulsgleichrichters, eines Achtzehnpulsgleichrichters oder eines Vierundzwanzigpulsgleichrichters.

4. Vorrichtung nach einem der vorangehenden Ansprüche, **dadurch gekennzeichnet, dass**
der mindestens eine Energiespeicher in Form eines Akkumulators und/oder eines Kondensators bereitgestellt ist.

5. Vorrichtung nach einem der vorangehenden Ansprüche, **dadurch gekennzeichnet, dass**
mindestens eines der zweiten elektrischen Verbindungselemente mit dem mindestens einen Energiespeicher über mindestens ein zweites Filterelement und/oder mindestens einen, insbesondere geregelten, Abwärtswandler, Aufwärtswandler und/oder Spannungswandler verbindbar oder verbunden ist.

6. Vorrichtung nach einem der vorangehenden Ansprüche, **dadurch gekennzeichnet, dass**
mindestens eine Regelungseinrichtung in Wirkverbindung mit mindestens einer Messeinrichtung umfasst ist, wobei die mindestens eine Messeinrichtung ausgelegt und eingerichtet ist, um den Ladezustand, die Temperatur, den Strom und/oder die Spannung des mindestens einen Energiespeichers zu messen, und wobei die mindestens eine Regelungseinrichtung ausgelegt und eingerichtet ist, um einen Ladezustand des mindestens einen Energiespeichers zu regeln, insbesondere durch eine Steuerung oder Regelung des mindestens einen Wechselrichters des mindestens einen Gleichstromumrichters, des mindestens einen Gleichrichters und/oder eines Stelltrafos.

7. Vorrichtung nach einem der vorangehenden Ansprüche, **dadurch gekennzeichnet, dass**
mindestens ein drittes elektrisches Verbindungselement, ausgelegt und eingerichtet, um die Vorrichtung mit mindestens einem Elektrofahrzeug zu verbinden, umfasst ist, wobei das mindestens eine dritte elektrische Verbindungselement mit der Anschlussleitung der Vorrichtung an das Stromnetz verbindbar oder verbunden ist, insbesondere über mindestens ein zwischengeschaltetes, steuerbares oder regelbares Strombegrenzungselement und/oder eine Strombegrenzung des Ladestroms durch ein mit den dritten elektrischen Verbindungselement verbindbares oder verbundenes Elektrofahrzeug vorgegeben oder vorgebbar ist.

8. Vorrichtung nach einem der vorangehenden Ansprüche, **dadurch gekennzeichnet, dass**
mindestens eines der zweiten elektrischen Verbindungselemente mit dem mindestens einen Energiespeicher über einen Wechselrichter, insbesondere einen Wechselrichter ausgelegt und eingerichtet zur Erzeugung von einphasigem oder dreiphasigen Wechselstrom, verbindbar oder verbunden ist.

9. Vorrichtung nach einem der vorangehenden Ansprüche, **gekennzeichnet durch**
mindestens eine Regelungseinrichtung, ausgelegt und eingerichtet, um eine individuelle Ladespannung und/oder einen individuellen Ladestrom an jedem der zweiten und/oder dritten Verbindungselemente einzustellen oder einzuregeln, insbesondere **durch** Regelung oder Steuerung des mindestens einen Wechselrichters, des mindestens einen Aufwärtswandlers, des mindestens einen Spannungswandlers und/oder des mindestens einen Abwärtswandlers, wobei insbesondere die mindestens eine Regelungseinrichtung ausgelegt und eingerichtet ist, um während eines Ladevorgangs Messwerte repräsentativ für Spannung, Strom und/oder die Temperatur mindestens eines Akkumulators mindestens eines mit dem mindestens einen zweiten und/oder dritten Verbindungselement verbindbaren oder verbundenen Elektrofahrzeugs zu messen und/oder Schwellwerte für den Ladestrom und/oder die Ladespannung von dem mindestens einen Elektrofahrzeug zu empfangen und/oder mittels mindestens einer Eingabeeinrichtung bereitgestellte Sollwerte zu erfassen, und die individuelle Ladespannung und/oder den individuellen Ladestrom an jedem der zweiten und/oder dritten Verbindungselemente in Abhängigkeit der erfassten Messwerte, der erfassten Schwellwerte und/oder der bereitgestellten Sollwerte zu steuern oder zu regeln.

10. Vorrichtung nach Anspruch 9, **dadurch gekennzeichnet, dass**
die Summe der Ladeströme der zweiten und/oder dritten Verbindungselemente kleiner oder gleich einem vorgegebenen Maximalwert ist, insbesondere kleiner oder gleich dem maximal abgebbaren Ladestrom des mindestens einen Energiespeicherspeichers ist.

11. Vorrichtung nach Anspruch 9 oder 10, **dadurch gekennzeichnet, dass**
die mindestens eine Eingabeeinrichtung ausgelegt und eingerichtet ist, um Eingabewerte eines Benutzers für einen bestimmten Ladezustand eines Elektrofahrzeugs und/oder einen bestimmten Zeitpunkt eines bestimmten Ladezustands zu erfassen, wobei die mindestens eine Regelungseinrichtung ausgelegt und eingerichtet ist, um den bestimmten Ladezustand, insbesondere zu einem bestimmten Zeitpunkt, bereitzustellen.

12. Vorrichtung nach einem der vorangehenden Ansprüche, **dadurch gekennzeichnet, dass**
das mindestens ein erstes elektrisches Verbindungselement mit dem Stromnetz, einer Photovoltaikanlage, einem Windkraftwerk, einem Wasserkraftwerk, einem Stromgenerator und/oder einem Elektrofahrzeug verbindbar oder verbunden ist, und insbesondere die mindestens eine Regelungseinrichtung ausgelegt und eingerichtet ist, um in dem mindestens einen Energiespeicher gespeicherte Energie an das Stromnetz abzugeben und/oder um einen von einem Elektrofahrzeug umfassten Energiespeicher zu laden und/oder um den mindestens einen elektrischen Energiespeicher durch einen mit dem mindestens einen zweiten und/oder dritten Verbindungselement verbindbaren oder verbundenen Energiespeicher eines Elektrofahrzeug zu laden.

13. Vorrichtung nach einem der vorangehenden Ansprüche, **dadurch gekennzeichnet, dass**
die Vorrichtung mit mindestens einem Server in Wirkverbindung steht oder bringbar ist, wobei die mindestens eine Regelungseinrichtung ausgelegt und eingerichtet ist, um Daten der mit der Vorrichtung verbundenen Elektrofahrzeuge, der abgegebenen Ladeströme und/oder Ladespannungen der zweiten und/oder dritten Verbindungselemente, des Ladezustands des mindestens einen Energiespeichers und/oder des Zeitpunkts eines, insbesondere mittels der mindestens einen Eingabeeinrichtung vorgebbaren oder vorgegebenen, bestimmten Ladezustands eines Elektrofahrzeugs an den Server zu übermitteln, und wobei insbesondere der Server ausgelegt und eingerichtet ist, der mindestens einen Regelungseinrichtung einen Maximalwert der Summe der abgebbaren oder abzugebenden Ladeströme, insbesondere zu mindestens einem bestimmten Zeitpunkt, vorzugeben.

14. System umfassend mindestens zwei Vorrichtungen nach einem der vorangehenden Ansprüche, **dadurch gekennzeichnet, dass**
die Vorrichtungen untereinander, und insbesondere mit einem Server, in Wirkverbindung stehen oder bringbar sind, wobei ein Maximalwert der Summe der abgebbaren oder abzugebenden Ladeströme und/oder Spannungen, insbesondere zu mindestens einem bestimmten Zeitpunkt, aller Vorrichtungen vorgebbar oder vorgegeben ist.

15. System nach Anspruch 14, **dadurch gekennzeichnet, dass**
der Server ausgelegt und eingerichtet ist, um mindestens einer der Regelungseinrichtungen vorgegebene Werte einer Leistungsaufnahme und/oder Leistungsabgabe an das Stromnetz bereitzustellen.
